# EUROPEAN PATENT APPLICATION

(11) **EP 1 933 320 A1**
(43) Date of publication of application: **18.06.2008**
(21) Application number: 06797308.1
(22) Date of filing: 01.09.2006
(51) Int. Cl.: G11B 20/10

(54) **CONTENTS DATA RECORDING/REPRODUCING SYSTEM, RECORDING/REPRODUCING DEVICE, MOBILE RECORDING/REPRODUCING DEVICE, AND METHOD**

(30) Priority: 04.10.2005 JP 2005291416
(71) Applicant: D&M Holdings, Inc., Kanagawa 210-8569 (JP)
(72) Inventor: FUKUSHIMA, Hiroshi, D & M Holdings Inc., Kawasaki-shi, Kanagawa 2108569 (JP); NAKATO, Kenichi, D & M Holdings Inc., Kawasaki-shi, Kanagawa 2108569 (JP); TAKASU, Yasuo, D & M Holdings Inc., Kawasaki-shi, Kanagawa 2108569 (JP); FUJIEDA, Toshiharu, D & M Holdings Inc., Kawasaki-shi, Kanagawa 2108569 (JP)
(74) Representative: Hackney, Nigel John
(86) International application number: PCT/JP2006/317366
(87) International publication number: WO 2007/043251

(57) **Abstract**

A contents data recording/reproducing method for use in a contents data recording/reproducing system comprising mutually connectable first and second recording/reproducing devices, the method comprising recording contents data input to either of the first and second recording/reproducing devices in the first and second recording/reproducing devices, respectively, wherein reproduction of only the contents data stored in either one of the first and recording/reproducing device is enabled when the first and second recording/reproducing devices are mutually connected, and reproduction of only the contents data stored in other of the first and recording/reproducing devices is enabled when the first and second recording/reproducing devices are not mutually connected.

## Description

### TECHNICAL FIELD

The present invention relates to a technique for recording and reproducing digital contents data with respect to a recording medium, while protecting copyright thereof.

### BACKGROUND ART

A recording device for receiving a broadcasting program transmitted from a television broadcasting station and recording an image signal and an audio signal (hereinafter referred to as contents data) of the received broadcasting program in a recording medium is available. The recording device records the contents data in a recording medium, such as a HD (Hard Disk) or the like, in a digital format, and reproduces the recorded contents data.

The contents data prepared in a digital format is easy to be copied (digital copy) with less deterioration in image and quality. Therefore, in order to prevent unlimited use (copy) of contents data to thereby protect the copyright thereof, copy control information is generally attached to such contents data.

In view of the above, a device for protecting the copyright of contents data in transmission to an external device is developed (Japanese Patent Laid-open Publication No. 2002-238023, for example). In the device, the contents data recorded in a first recording medium incorporated in the device is transferred to a second recording medium of an external device, and the contents data left in the first recording medium is deleted. That is, the contents data is permitted only to "move" from the recording device to the external device, so that unlimited copying thereof can be prevented.

Here, in recent years, a mobile recording/reproducing device capable of reproduction of motion picture content is widely used, and an increasing number of people come to enjoy reviewing the contents data which is recorded using home-use recording devices and transferred their mobile recording/reproducing devices outside their homes or during commute or the like.

It should be noted here that, in transferring of contents data recorded in a recording device to a mobile recording/reproducing device, the resolution of the contents data may be converted lower in some cases. This may occur in cases, for example, where the resolution of the contents data recorded in the recording device is higher than that of the mobile recording/reproducing device to which the contents data is transferred.

Then, according to the aforementioned patent document, the contents data left in the recording device is deleted after transferring the contents data to the external device. Therefore, the user wishing to keep the contents data having been transferred to an external device, stored and reproduced in the recording device, for example, needs to move back the contents data from the mobile recording/reproducing device to the recording device. Such an operation is required when, for example, the user wishes to see the contents data on a large screen rather than a small screen of the mobile recording/reproducing device, or when the contents data cannot be stored in the mobile recording/reproducing device due to the limited recording capacity thereof. This imposes inconvenience on the user.

Further, with respect to the contents data subjected to resolution conversion to lower resolution in transferring from a recording device to a mobile recording/reproducing device, the contents data having lower resolution is moved back from the recording device to the recording device. In this case, the user cannot store and reproduce the transferred contents data with the originally recorded quality, or resolution, thereof.

As described above, an arrangement which allows only movement of contents data recorded in a recording device is desirable for the copyright holder, but presents inconvenience to the user. In view of the above, technique for allowing the user to use (reproduction) contents data recorded in a recording device, using an external device without need to delete the contents data recorded in the recording device is desired. The present invention aims to address the inconvenience suffered by the above-described related art.

### DISCLOSURE OF THE INVENTION

In order to achieve the above-described object, according to a first aspect of the present invention, there is provided a contents data recording/reproducing method for use in a contents data recording/reproducing system comprising mutually connectable first and second recording/reproducing devices, the method comprising recording contents data input to either of the first and second recording/reproducing devices, in the first and second recording/reproducing devices, respectively, wherein reproduction of only the contents data stored in either one of the first and second recording/reproducing device is enabled when the first and second recording/reproducing devices are mutually connected, and reproduction of only the contents data stored in other one of the first and second recording/reproducing devices is enabled when the first and second recording/reproducing devices are not mutually connected.

As reproduction of either one of the contents data respectively recorded alone is enabled, unlimited user of the contents data is prevented; the copyright thereof is adequately protected; and usability for the user is improved.

In the above-described contents data recording/reproducing method, the first and second recording/reproducing devices may record the contents data having different qualities.

In order to achieve the above-described object, according to another aspect of the present invention, there is provided a contents data recording/reproducing system, comprising (A) a recording/reproducing device including an input unit for inputting contents data; a first recording unit for recording the contents data input from the input unit; a transmission unit connected to a mobile recording/reproducing device, for transferring the contents data to the mobile recording/reproducing device, and for sending a control signal; a first control unit for recording, when the mobile recording/reproducing device is connected to the transmission unit, the contents data input from the input unit in the first recording unit and transferring the contents data to the mobile recording/reproducing device connected to the transmission unit to control recording and reproduction of the contents data transferred; and a first management information storage unit for storing reproduction possible/impossible information of the contents data recorded in the first recording unit, wherein the first control unit sets, when a mobile recording/reproducing device where contents data having identical content to the contents data recorded in the first recording unit is recorded is connected to the transmission unit, reproduction possible/impossible information of the contents data stored in the first management information storage unit to be reproduction possible, and sets, when the mobile recording/reproducing device is not connected to the transmission unit, the reproduction possible/impossible information of the contents data stored in the first management information storage unit to be reproduction impossible, and (B) a mobile recording/reproducing device including a receiving unit connected to the recording/reproducing device, for receiving the contents data transferred from the recording/reproducing device; a second recording unit for recording the contents data received by the receiving unit; a second management information storage unit for storing reproduction possible/impossible information of the contents data recorded in the second recording unit; and a second control unit for setting, when a recording/reproducing device where contents data having identical content to the contents data recorded in the second recording unit is recorded is connected to the receiving unit, reproduction possible/impossible information of the contents data stored in the management information storage unit to be reproduction impossible, and setting, when the recording/reproducing device is not connected to the receiving unit, the reproduction possible/impossible information of the contents data stored in the management information storage unit to be reproduction possible.

In the above-described recording/reproducing system, the recording/reproducing device may further include a conversion unit for converting quality of the contents data to be transferred from the transmission unit to the mobile recording/reproducing device.

In order to achieve the above-described object, according to a third aspect of the present invention, there is provided a recording/reproducing device comprising an input unit for inputting contents data; a recording unit for recording the contents data input from the input unit; a transmission unit connected to a mobile recording/reproducing device, for transferring the contents data to the mobile recording/reproducing device, and for sending a control signal; a control unit for recording, when the mobile recording/reproducing device is connected to the transmission unit, the contents data input from the input unit in the recording unit and transferring the contents data to the mobile recording/reproducing device connected to the transmission unit to control recording and reproduction of the contents data transferred; and a management information storage unit for storing reproduction possible/impossible information of the contents data recorded in the recording unit, wherein the control unit sets, when a mobile recording/reproducing device where contents data having identical content to the contents data recorded in the recording unit is recorded is connected to the transmission unit, reproduction possible/impossible information of the contents data stored in the management information storage unit to be reproduction possible, and sets, when the mobile recording/reproducing device is not connected to the transmission unit, the reproduction possible/impossible information of the contents data stored in the management information storage unit to be reproduction impossible.

The above-described recording/reproducing device may further comprise a conversion unit for converting quality of the contents data to be transferred from the transmission unit to a mobile recording/reproducing device.

In order to achieve the above-described object, according to a fourth aspect of the present invention, there is provided mobile recording/reproducing device comprising a receiving unit connected to the recording/reproducing device, for receiving the contents data transferred from the recording/reproducing device; a recording unit for recording the contents data received by the receiving unit; a management information storage unit for storing reproduction possible/impossible information of the contents data recorded in the recording unit; and a control unit for setting, when a recording/reproducing device where contents data having identical content to the contents data recorded in the recording unit is recorded is connected to the receiving unit, reproduction possible/impossible information of the contents data stored in the management information storage unit to be reproduction impossible, and setting, when the recording/reproducing device is not connected to the receiving unit, the reproduction possible/impossible information of the contents data stored in the management information storage unit to be reproduction possible.

In the above-described mobile recording/reproducing device, the contents data having quality different from that of the contents data recorded in the recording/reproducing device may be recorded.

### BRIEF DESCRIPTION OF THE DRAWINGS

Fig. 1 is a block diagram showing a structure of a recording/reproducing device according to this embodiment;
Fig. 2 is a diagram describing content information according to this embodiment;
Fig. 3 is a block diagram showing a structure of a mobile recording/reproducing device adapted to connection to the recording/reproducing device according to this embodiment; and
Fig. 4 is a flowchart explaining a contents data recording operation.

### BEST MODE FOR CARRYING OUT THE INVENTION

In the following, an embodiment of the present invention will be described.

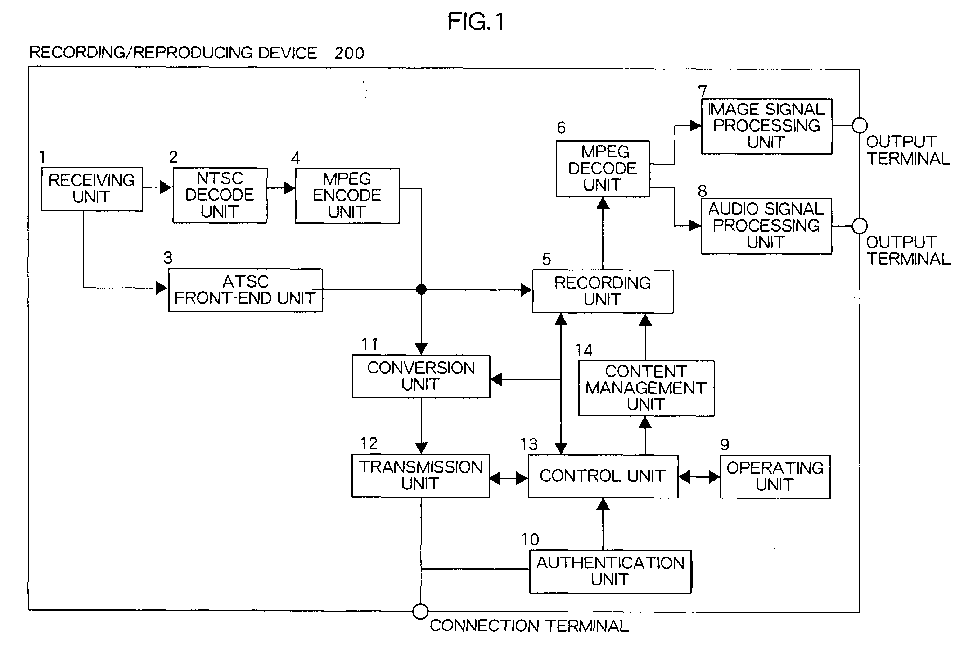

Fig. 1 is a diagram showing a structure of a recording/reproducing device constituting a contents data recording system, or one embodiment of the present invention. A recording/reproducing device according to this embodiment is adapted to connection to a mobile recording/reproducing device (an external device) to be described later.

The recording/reproducing device 200 shown in Fig. 1 comprises a receiving unit 1, an NTSC (National Television Standards Committee) decode unit 2, an ATSC (Advanced Television Systems Committee) front-end unit 3, an MPEG (Moving Picture Experts Group) encode unit 4, a recording unit 5, an MPEG decode unit 6, an image signal processing unit 7, an audio signal processing unit 8, an operating unit 9, an authentication unit 10, a conversion unit 11, a transmission unit 12, a control unit 13, and a content management unit 14.

The receiving unit 1 is a tuner for receiving broadcasting program information about analog television broadcasting and digital television broadcasting, serving as an input means for inputting contents data. The receiving unit 1 outputs contents data about broadcasting program information of the received analog television broadcasting to the NTSC decode unit 2, and also contents data about the received digital television broadcasting, subjected to compression using the MPEG method, to the ATSC front-end unit 3. For a broadcasting signal encoded (scrambled), the receiving unit 1 decodes (descramble) the received signal before output.

The NTSC decode unit 2 converts the contents data received from the receiving unit 1 into digital data, then restores contents data according to the NTSC system (a digital image signal and a digital audio signal) through demodulation, and outputs to the MPEG encode unit 4. The MPEG encode unit 4 compresses the contents data received from the NTSC decode unit 2 according to a compression algorithm of the MPEG method, and outputs to the recording unit 5. The ATSC front-end unit 3 converts the contents data received from the receiving unit 1 into bit stream data, and outputs to the recording unit 5.

It should be noted that the receiving unit 1 may be arranged capable of receiving only one of the analog broadcasting signal and the digital broadcasting signal. The broadcasting method is not limited to NTSC or ATSC, and any other method, such as PAL (Phase Alternating Line), SECAM (Sequential Couleur Amemoire), DVB (Digital Video Broadcasting), and so forth, is applicable. Further, the compression method for a digital signal is also not limited to the MPEG method, and any other method, such as H.264, or the like, is applicable.

The recording unit 5 has a recording medium, such as a HD, a semiconductor memory, or the like, and records the contents data compressed using the MPEG method and input via the ATSC front-end unit 3 and the MPEG encode unit 4 in a recording medium. The recording unit 5 reproduces the contents data recorded in the recording medium under control of the control unit 13.

The MPEG decode unit 6 expands the contents data reproduced by the recording unit 5 according to an expansion algorithm in the MPEG method. The expanded digital image signal is output to the image signal process 7, while the expanded digital audio signal is output to the audio signal processing unit 8.

The image signal processing unit 7 converts the digital image signal into an analog signal, and processes the converted signal by emphasizing, or the like. The audio signal processing unit 8 converts a digital audio signal into an analog signal, and processes the converted signal by amplifying, or the like. The converted analog image signal and analog audio signal are output via the display device and the speaker (not shown), respectively, which are connected to the output terminal. It should be noted that the digital signal may not be converted into an analog signal but output in the form of a digital signal should the device to which the respective signals are output is adapted to a digital signal.

For operation of the recording device in this embodiment to record the received contents data in the recording unit 5 and to reproduce the contents data recorded in the recording unit 5, the operating unit 9 has an operation button and a display unit for displaying the content of an operation carried out to the operation button.

The authentication unit 10 authenticates the mobile recording/reproducing device based on the information input from the mobile recording/reproducing device, to be described later, connected to a connection terminal of the transmission unit 12. The authentication method may include one which utilizes key exchange or information unique to the mobile recording/reproducing device, such as a manufacturing number, and so forth. The authentication unit 10 outputs the authentication result related to the mobile recording/reproducing device to the control unit 13.

The conversion unit 11 converts the resolution of contents data to be transferred to the mobile recording/reproducing device into low resolution, when necessary, before output to the transmission unit 12.

The transmission unit 12 comprises a connection terminal for connection to a mobile recording/reproducing device, constituting a bus interface for transferring the contents data and a recording control signal between the recording device and the mobile recording/reproducing device in this embodiment. The transmission unit 12 constitutes an interface, such as, USB (Universal Serial Bus), IEEE 1394 (Institute of Electrical and Electronic Engineers 1394), HDMI (High-Definition Multimedia Interface), or the like, for example. It should be noted that the transmission unit 12 may be connected by radio to the mobile recording/reproducing device.

When the authentication unit 10 authenticates the mobile recording/reproducing device connected to the recording/reproducing device 200, the transmission unit 12 obtains information, such as resolution information, about the mobile recording/reproducing device from the mobile recording/reproducing device. The obtained information about the mobile recording/reproducing device is input to the control unit 13.

The control unit 13 controls recording and reproduction of contents data, transfer of contents data to the authenticated mobile recording/reproducing device, and recording in the mobile recording/reproducing device, and so forth. Moreover, the control unit 13 controls the conversion unit 11, based on the information -about the mobile recording/reproducing device obtained via the transmission unit 12, so as to convert the contents data so as to be adapted to reproduction in the mobile recording/reproducing device. Under control of the control unit 13, the conversion unit 11 converts, for example, the contents data recorded in the recording unit 5 having highly precise (HD: High Definition) image quality so as to have standard precise (SD: Standard Definition) image quality or the number of screen image pixels displayable in the mobile recording/reproducing device.

The content management unit 14 manages the attribute information of the contents data recorded in the recording unit 5. The content management unit 14, which has a content information recording table (not shown), produces attribute information of the contents data (hereinafter referred to as content information) for every contents data recorded in the recording unit 5, and records the information in the content information recording table, the attribute information including information about the file name and transfer destination of contents data, information about whether or not reproduction of the contents data is possible, and so forth.

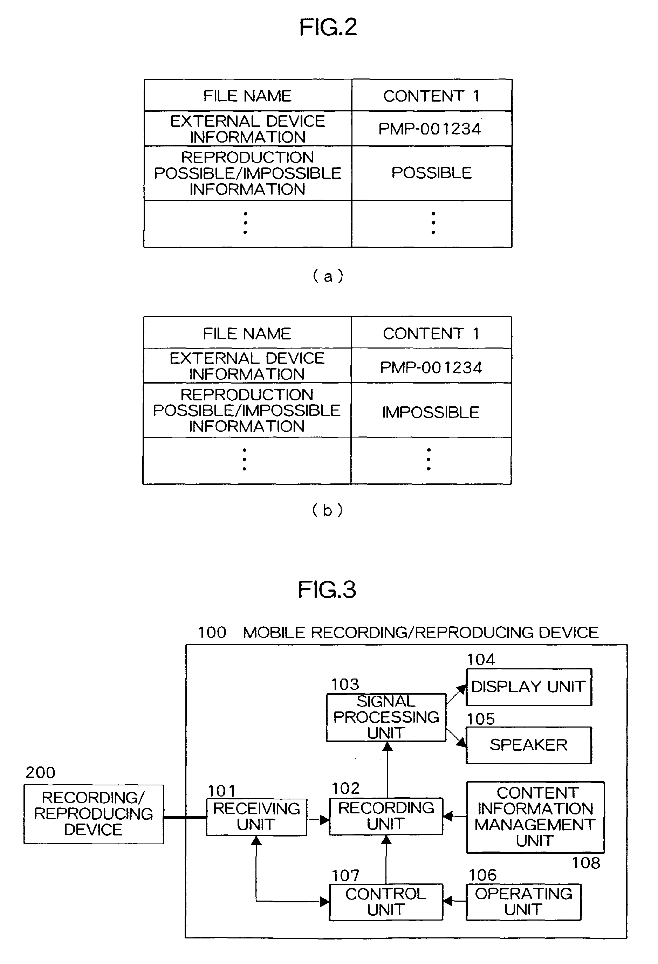

Fig. 2 is a diagram explaining content information in this embodiment. The content information shown in Fig. 2 concerns contents data having a file name "content 1" recorded in the recording unit 5. External device information is information (information unique to a device, such as a manufacturing number, or the like) identifying the mobile recording/reproducing device to which the contents data "content 1" is transferred, and obtained via the transmission unit 12 from the mobile recording/reproducing device. With no contents data transferred to the mobile recording/reproducing device, no information identifying the mobile recording/reproducing device is stored, so that mutual access is not allowed.

The reproduction possible/impossible information is information describing whether or not reproduction of contents data recorded in the recording unit 5 is possible. When reproduction of the contents data "content 1" is possible, reproduction possible/impossible information telling reproduction possible is recorded, as shown in Fig. 2(a). When reproduction of the contents data "content 1" is not possible, reproduction possible/impossible information telling reproduction impossible is recorded, as shown in Fig. 2(b).

Fig. 3 shows a structure of a contents data recording system in this embodiment. The contents data recording system in this embodiment, shown in Fig. 3, comprises a mobile recording/reproducing device 100 and the aforementioned recording/reproducing device 200. The mobile recording/reproducing device 100 according to this embodiment is an external device adapted to connection (mutual access) to the recording/reproducing device 200 according to this embodiment. In this specification, or the like, a "recording/reproducing device" refers to a recorder, or the like, which is installed immobile at home or the like for use, while a "mobile recording/reproducing device" refers to a mobile player or the like, which is generally small, for example, in a palm size.

The mobile recording/reproducing device 100, shown in Fig. 3, comprises a receiving unit 101, a recording unit 102, a signal processing unit 103, a display unit 104, a speaker 105, an operating unit 106, a control unit 107, and a content information management unit 108.

The receiving unit 101 has a connection interface adapted to connection to the recording/reproducing device 200, constituting an interface for receiving contents data and a control signal transferred from the recording/reproducing device 200.

The recording unit 102 has a recording medium, such as a HD, a semiconductor memory, or the like, and records the contents data received by the receiving unit 101. In addition, the recording unit 102 reproduces the contents data recorded in the recording medium.

The signal processing unit 103 expands the contents data produced by the recording unit 102 according to an expansion algorithm of the MPEG method, for example, then converts the expanded digital image signal into an analog image signal and also the expanded digital audio signal into an analog audio signal, and processes the converted analog audio signal by amplifying, or the like. The signal processing unit 103 supplies the analog image signal to the display unit 104 for display. Obviously, the digital image signal need not be converted into an analog signal should the display unit 104 be adapted to display of a digital image signal. The signal processing unit 103 also supplies the analog audio signal to the speaker 105 to be output.

The operating unit 106 has an operation button or the like for use to reproduce contents data recorded in the recording unit 102. The control unit 107 controls recording of the contents data transferred from the recording/reproducing device 200 in the recording unit 102 and reproduction of the contents data recorded in the recording unit 102 in response to a reproduction instruction from the operating unit 106.

The control unit 107 manages the contents data recorded in the recording unit 102. Specifically, the control unit 107 produces content information, such as is shown in Fig. 2, for every contents data recorded in the recording unit 102, and stores in the content management information storage unit 108.

When the mobile recording/reproducing device 100 is connected to the recording/reproducing device 200, the control unit 107 produces content management information ruling out the reproduction of contents data sent from the recording/reproducing device 200, from the recording unit 102, as to be described below in detail. Meanwhile, when the mobile recording/reproducing device 100 is not connected to the recording/reproducing device 200, the control unit 107 produces content management information enabling the reproduction of the contents data sent from the recording/reproducing device 200, from the recording unit 102.

In the following, a contents data recording operation to be carried out in the recording/reproducing device 200 according to this embodiment will be described.

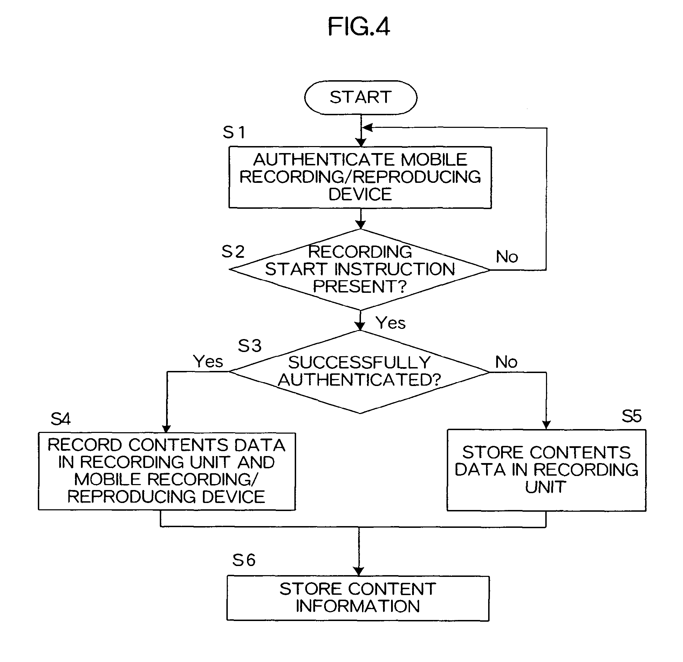

Fig. 4 is a flowchart of a contents data recording operation to be carried out in the recording/reproducing device 200 according to this embodiment.

When the mobile recording/reproducing device 100 is brought into connection to the recording/reproducing device 200 according to this embodiment, the authentication unit 10 authenticates the mobile recording/reproducing device 100 by utilizing key exchange or information or the like unique to the device, such as a manufacturing number or the like (step S1). The authentication unit 10 outputs the authentication result related to the mobile recording/reproducing device 100 to the control unit 13.

With the mobile recording/reproducing device 100 authenticated, the control unit 13 determines whether or not an instruction instructing recording of the contents data is present (step S2). When it is determined that an instruction instructing recording of the contents data is present due to a user instruction instructing beginning of recording or reservation for recording, which is made using the operating unit 9, the control unit 13 controls recording of the contents data, based on the result of authentication of the mobile recording/reproducing device 100 at step S1.

In the above, upon authentication of the mobile recording/reproducing device 100 by the authentication unit 10, the control unit 13 supplies contents data to the recording unit 5. In addition, the control unit 13 transfers the contents data via the conversion unit 11 and the transmission unit 12 to the mobile recording/reproducing device 100 and controls recording of the contents data. It should be noted that whether or not it is necessary to record the contents data in the mobile recording/reproducing device 100 may be determined by the user through a GUI (Graphical User Interface). The recording unit 5 records the contents data input.

Also, the contents data to be transferred to the mobile recording/reproducing device 100 is converted by the conversion unit 11, when necessary, so as to have a resolution adapted to reproduction in the mobile recording/reproducing device 100, and the contents data transferred via the transmission unit 12 to the mobile recording/reproducing device 100 is recorded in the recording unit 102 thereof (steps S3 and S4). That is, the contact data is recorded in the recording unit 102 of the mobile recording/reproducing device 100 with a resolution lower than the original resolution of the contents data recorded in the recording unit 5 of the recording/reproducing device 200.

Meanwhile, when the authentication unit 10 does not authenticate the mobile recording/reproducing device 100, the control unit 13 controls recording of the contents data in the recording unit 5 (steps S3 and S5). The contents data does not control to transfer the contents data to the mobile recording/reproducing device 100 not authenticated and to record therein.

Upon completion of the recording of the contents data, the content management unit 14 produces content information about the contents data recorded in the recording unit 5 under control of the control unit 13, and stores in the content information recording table (step S6). With the data recorded in the recording unit 5 as well as in the recording unit 102 of the mobile recording/reproducing device 100, the content management unit 14 stores the file name of the contents data recorded in the recording unit 5, the external device information about the mobile recording/reproducing device 100 to which the contents data is transferred, and reproduction possible/impossible information enabling reproduction of the contents data, as shown in Fig. 2(a). Meanwhile, when the contents data is not transferred to the mobile recording/reproducing device 100 but recorded only in the recording unit 5, the content management unit 14 stores the file name of the contents data recorded in the recording unit 5 and reproduction possible/impossible information ruling out the reproduction of the contents data.

As described above, the recording/reproducing device 200 according to this embodiment records the contents data in the recording unit 5 and also in the recording unit 102 of the recording/reproducing device 100 connected thereto when the connected mobile recording/reproducing device 100 is authenticated. On the other hand, the recording/reproducing device 200 records the contact data only in the recording unit 5 when the connected mobile recording/reproducing device 100 connected thereto is not authenticated.

Next, an operation for reproducing the contact data recorded in the recording/reproducing device 200 and in the mobile recording/reproducing device 100 according to this embodiment will be described.

The mobile recording/reproducing device 100 according to this embodiment, when connected to the recording/reproducing device 200, enables the reproduction of the contents data recorded in the recording unit 5 and ruling out the reproduction of the contents data recorded in the recording unit 102 of the mobile recording/reproducing device 100. Meanwhile, the recording/reproducing device 200, when not connected to the mobile recording/reproducing device 100, enables the reproduction of the contents data recorded in the recording unit 102 of the mobile recording/reproducing device 100 and rules out the reproduction of the contents data recorded in the recording unit 5.

With the mobile recording/reproducing device 100 removed from the recording/reproducing device 200 according to this embodiment, the control unit 13 controls the content management unit 14 so as to change the contents data recorded in the recording unit 5, which is identical to the contents data recorded in the recording unit 102 of the mobile recording/reproducing device 100, from production possible to production impossible. The content management unit 14 accordingly changes the reproduction possible/impossible information in the content information identical to the external device information of the mobile recording/reproducing device 100 removed from reproduction possible to reproduction impossible. For example, when the external device information of the removed mobile recording/reproducing device 100 is read as "PMP-001234", the reproduction possible/impossible information telling reproduction possible, as shown in Fig. 2(a), is changed to reproduction possible/impossible information telling reproduction impossible, as shown in Fig. 2(b).

Meanwhile, the mobile recording/reproducing device 100 according to this embodiment, when removed from the recording/reproducing device 200, controls via the control unit 107 so as to enable reproduction of the contents data recorded in the recording medium 102. That is, the control unit 107 changes the content management information of the contents data sent from the recording/reproducing device 200 of the content information storage unit 108 from production impossible to production possible.

That is, reproduction of the contents data recorded in the recording unit 5 of the recording/reproducing device 200 and also in the recording unit 102 of the mobile recording/reproducing device 100 is possible only in the recording/reproducing device 200 but not in the mobile recording/reproducing device 100, when the recording/reproducing device 200 is connected to the mobile recording/reproducing device 100. Then, with the mobile recording/reproducing device 100 removed from the recording/reproducing device 200, reproduction of the contents data is no longer possible in the recording/reproducing device 200, but possible in the mobile recording/reproducing device 100.

For example, when wishing to review contents data, using the mobile recording/reproducing device 100, the user connects the mobile recording/reproducing device 100 to the recording/reproducing device 200 when recording the contents data in the recording/reproducing device 200, so that the contents data is recorded simultaneously in both of the mobile recording/reproducing device 100 and the recording/reproducing device 200. Then, the user, after removing the mobile recording/reproducing device 100 from the recording/reproducing device 200, can review the contents data outside home, such as during commute, or the like, using the mobile recording/reproducing device 100. In the above, reproduction of the contents data is impossible in the recording/reproducing device 200.

When the user thereafter wishes to use (storage, reproduction) the identical contents data, using the recording/reproducing device 200, the user connects the mobile recording/reproducing device 100 again to the recording/reproducing device 200. Thereupon, the recording/reproducing device 200 having detected the connection obtains the management information about the contents data recorded in the connected mobile recording/reproducing device 100 connected thereto, then compares with the content management information in the content management unit 14, and, as to the contact data proved to have external device information and file name coincident with each other in the comparison, changes the reproduction possible/impossible information from reproduction impossible to reproduction possible. Meanwhile, the mobile recording/reproducing device 100 having detected the connection makes similar comparison, and, as to the contents data recorded also in the recording/reproducing device 200, changes the reproduction possible/impossible information thereof from reproduction possible to reproduction impossible. As a result, reproduction of the contents data recorded in both of the recording/reproducing device 200 and the mobile recording/reproducing device 100 becomes possible only in the recording/reproducing device 200 but not in the mobile recording/reproducing device 100.

Such reconnection makes it possible for the user to use the connection data with the original resolution with which the contents data is recorded in the recording/reproducing device 200 even when the contents data is recorded in the mobile recording/reproducing device 100 with a resolution lower than the original resolution of the contents data.

As described above, it is possible to arrange such that contents data is usable (reproducible) only in either one of the recording/reproducing device 200 and the mobile recording/reproducing device 100 according to this embodiment. This can prevent unlimited use of the content, while protecting the copyright thereof.

As described above, when the mobile recording/reproducing device 100 is connected to the recording/reproducing device 200 in the contents data recording system according to this embodiment, only the reproduction of the contents data recorded in the recording unit 5 is possible, and when the connected mobile recording/reproducing device 100 is removed, only the reproduction of the contents data recorded in the recording unit 102 of the mobile recording/reproducing device 100 is possible. Therefore, with the mobile recording/reproducing device 100 removed from the recording/reproducing device 200 according to this embodiment, advantage equivalent to that which will be produced when the contents data is transferred (moved) from the recording/reproducing device 200 to the mobile recording/reproducing device 100 can be produced.

That is, the user can review the contents data recorded with a lower resolution in the mobile recording/reproducing device 100, for example, and also can store and review the contents data in the recording/reproducing device 200 with the original higher resolution. Moreover, as transfer of the contents data to the mobile recording/reproducing device 100 is unnecessary, substantially no time is needed for contents data transferring, and the user can instantly use the contents data, using the mobile recording/reproducing device 200.

As described above, according to this embodiment, a broadcasting signal is recorded in the recording/reproducing device 200 and also in the mobile recording/reproducing device 100 connected to the recording/reproducing device 200. Also, either one of the contact data recorded in the recording/reproducing device 200 and that in the mobile recording/reproducing device 100 is usable (reproducible) at a time. This arrangement can prevent unlimited use of contents data, while adequately protecting the copyright thereof.

Meanwhile, the user can use the contents data identical in content to that which is recorded in the recording/reproducing device 200, using the mobile recording/reproducing device 100 without deleting the contents data from the recording/reproducing device 200. This makes it possible for the user to store and reproduce the contents data in the recording/reproducing device 200 with quality equivalent to that of the broadcasting signal even when the resolution of the broadcasting signal is converted (down-converted) such that the signal is reproducible in the mobile recording/reproducing device 100.

With the above, according to this embodiment, it is possible to improve usability for the user in using the contents data, while protecting the copyright thereof.

### INDUSTRIAL APPLICABILITY

The present invention is extremely useful in application with a recording device for recording an image signal and an audio signal in a recording medium, while protesting a copyright.

## Claims

1. A contents data recording/reproducing method for use in a contents data recording/reproducing system comprising mutually connectable first and second recording/reproducing devices, the method comprising:
recording contents data input to either of the first and second recording/reproducing devices, in the first and second recording/reproducing devices, respectively,
wherein
reproduction of only the contents data stored in either one of the first and second recording/reproducing device is enabled when the first and second recording/reproducing devices are mutually connected, and
reproduction of only the contents data stored in other one of the first and second recording/reproducing devices is enabled when the first and second recording/reproducing devices are not mutually connected.

2. The contents data recording/reproducing method according to claim 1, wherein the first and second recording/reproducing devices record the contents data having different qualities.

3. A contents data recording/reproducing system, comprising:
(A) a recording/reproducing device including:
an input unit for inputting contents data;
a first recording unit for recording the contents data input from the input unit;
a transmission unit connected to a mobile recording/reproducing device, for transferring the contents data to the mobile recording/reproducing device, and for sending a control signal;
a first control unit for recording, when the mobile recording/reproducing device is connected to the transmission unit, the contents data input from the input unit in the first recording unit and transferring the contents data to the mobile recording/reproducing device connected to the transmission unit to control recording and reproduction of the contents data transferred; and
a first management information storage unit for storing reproduction possible/impossible information of the contents data recorded in the first recording unit,
wherein
the first control unit sets, when a mobile recording/reproducing device where contents data having identical content to the contents data recorded in the first recording unit is recorded is connected to the transmission unit, reproduction possible/impossible information of the contents data stored in the first management information storage unit to be reproduction possible, and sets, when the mobile recording/reproducing device is not connected to the transmission unit, the reproduction possible/impossible information of the contents data stored in the first management information storage unit to be reproduction impossible,
and
(B) a mobile recording/reproducing device including
a receiving unit connected to the recording/reproducing device, for receiving the contents data transferred from the recording/reproducing device;
a second recording unit for recording the contents data received by the receiving unit;
a second management information storage unit for storing reproduction possible/impossible information of the contents data recorded in the second recording unit; and
a second control unit for setting, when a recording/reproducing device where contents data having identical content to the contents data recorded in the second recording unit is recorded is connected to the receiving unit, reproduction possible/impossible information of the contents data stored in the management information storage unit to be reproduction impossible, and setting, when the recording/reproducing device is not connected to the receiving unit, the reproduction possible/impossible information of the contents data stored in the management information storage unit to be reproduction possible.

4. The contents data recording/reproducing system according to claim 3, wherein
the recording/reproducing device further includes a conversion unit for converting quality of the contents data to be transferred from the transmission unit to the mobile recording/reproducing device.

5. A recording/reproducing device, comprising:
an input unit for inputting contents data;
a recording unit for recording the contents data input from the input unit;
a transmission unit connected to a mobile recording/reproducing device, for transferring the contents data to the mobile recording/reproducing device, and for sending a control signal;
a control unit for recording, when the mobile recording/reproducing device is connected to the transmission unit, the contents data input from the input unit in the recording unit and transferring the contents data to the mobile recording/reproducing device connected to the transmission unit to control recording and reproduction of the contents data transferred; and
a management information storage unit for storing reproduction possible/impossible information of the contents data recorded in the recording unit,
wherein
the control unit sets, when a mobile recording/reproducing device where contents data having identical content to the contents data recorded in the recording unit is recorded is connected to the transmission unit, reproduction possible/impossible information of the contents data stored in the management information storage unit to be reproduction possible, and sets, when the mobile recording/reproducing device is not connected to the transmission unit, the reproduction possible/impossible information of the contents data stored in the management information storage unit to be reproduction impossible,

6. The recording/reproducing device according to claim 5, further comprises a conversion unit for converting quality of the contents data to be transferred from the transmission unit to a mobile recording/reproducing device.

7. A mobile recording/reproducing device, comprising
a receiving unit connected to the recording/reproducing device, for receiving the contents data transferred from the recording/reproducing device;
a recording unit for recording the contents data received by the receiving unit;
a management information storage unit for storing reproduction possible/impossible information of the contents data recorded in the recording unit; and
a control unit for setting, when a recording/reproducing device where contents data having identical content to the contents data recorded in the recording unit is recorded is connected to the receiving unit, reproduction possible/impossible information of the contents data stored in the management information storage unit to be reproduction impossible, and setting, when the recording/reproducing device is not connected to the receiving unit, the reproduction possible/impossible information of the contents data stored in the management information storage unit to be reproduction possible.

8. The mobile recording/reproducing device according to claim 7, wherein the contents data having quality different from that of the contents data recorded in the recording/reproducing device is recorded.

## Amended claims

### Amended claims under Art. 19.1 PCT

**1.** A contents data recording/reproducing method for using in a contents data recording/reproducing system comprising mutually connectable first and second recording/reproducing devices, the method comprising:
recording contents data to be input from a receiving unit for receiving broadcasting program information in the first and second recording/reproducing devices, respectively,
wherein
reproduction of only the contents data stored in either one of the first and second recording/reproducing device is enabled when the first and second recording/reproducing devices are mutually connected, and
reproduction of only the contents data stored in other one of the first and second recording/reproducing devices is enabled when the first and second recording/reproducing devices are not mutually connected.

**2.** The contents data recording/reproducing method according to claim 1, wherein the first and second recording/reproducing devices record the contents data having different qualities.

**3.** A contents data recording/reproducing system, comprising:
(A) a recording/reproducing device including:
a first receiving unit for receiving broadcasting program information;
a first recording unit for recording the contents data input from the first receiving unit;
a transmission unit connected to a mobile recording/reproducing device, for transferring the contents data to the mobile recording/reproducing device, and for sending a control signal;
a first control unit for recording, when the mobile recording/reproducing device is connected to the transmission unit, the contents data input from the first receiving unit in the first recording unit and transferring the contents data to the mobile recording/reproducing device connected to the transmission unit to control recording and reproduction of the contents data transferred; and
a first management information storage unit for storing reproduction possible/impossible information of the contents data recorded in the first recording unit,
wherein
the first control unit sets, when a mobile recording/reproducing device where contents data having identical content to the contents data recorded in the first recording unit is recorded is connected to the transmission unit, reproduction possible/impossible information of the contents data stored in the first management information storage unit to be reproduction possible, and sets, when the mobile recording/reproducing device is not connected to the transmission unit, the reproduction possible/impossible information of the contents data stored in the first management information storage unit to be reproduction impossible,
and
(B) a mobile recording/reproducing device including
a second receiving unit connected to the recording/reproducing device, for receiving the contents data transferred from the recording/reproducing device;
a second recording unit for recording the contents data received by the second receiving unit;
a second management information storage unit for storing reproduction possible/impossible information of the contents data recorded in the second recording unit; and
a second control unit for setting, when a recording/reproducing device where contents data having identical content to the contents data recorded in the second recording unit is recorded is connected to the second receiving unit, reproduction possible/impossible information of the contents data stored in the management information storage unit to be reproduction impossible, and setting, when the recording/reproducing device is not connected to the second receiving unit, the reproduction possible/impossible information of the contents data stored in the management information storage unit to be reproduction possible.

**4.** The contents data recording/reproducing system according to claim 3, wherein
the recording/reproducing device further includes a conversion unit for converting quality of the contents data to be transferred from the transmission unit to the mobile recording/reproducing device.

**5.** A recording/reproducing device, comprising:
a receiving unit for receiving broadcasting program information;
a recording unit for recording the contents data input from the receiving unit;
a transmission unit connected to a mobile recording/reproducing device, for transferring the contents data to the mobile recording/reproducing device, and for sending a control signal;
a control unit for recording, when the mobile recording/reproducing device is connected to the transmission unit, the contents data input from the receiving unit in the recording unit and transferring the contents data to the mobile recording/reproducing device connected to the transmission unit to control recording and reproduction of the contents data transferred; and
a management information storage unit for storing reproduction possible/impossible information of the contents data recorded in the recording unit,
wherein
the control unit sets, when a mobile recording/reproducing device where contents data having identical content to the contents data recorded in the recording unit is recorded is connected to the transmission unit, reproduction possible/impossible information of the contents data stored in the management information storage unit to be reproduction possible, and sets, when the mobile recording/reproducing device is not connected to the transmission unit, the reproduction possible/impossible information of the contents data stored in the management information storage unit to be reproduction impossible,

**6.** The recording/reproducing device according to claim 5, further comprises a conversion unit for converting quality of the contents data to be transferred from the transmission unit to a mobile recording/reproducing device.

**7.** A mobile recording/reproducing device, comprising
a receiving unit connected to the recording/reproducing device, for receiving the contents data transferred from the recording/reproducing device;
a recording unit for recording the contents data received by the receiving unit;
a management information storage unit for storing reproduction possible/impossible information of the contents data recorded in the recording unit; and
a control unit for setting, when a recording/reproducing device where contents data having identical content to the contents data recorded in the recording unit is recorded is connected to the receiving unit, reproduction possible/impossible information of the contents data stored in the management information storage unit to be reproduction impossible, and setting, when the recording/reproducing device is not connected to the receiving unit, the reproduction possible/impossible information of the contents data stored in the management information storage unit to be reproduction possible.

**8.** The mobile recording/reproducing device according to claim 7, wherein the contents data having quality different from that of the contents data recorded in the recording/reproducing device is recorded.
